# EUROPÄISCHE PATENTSCHRIFT

(11) **EP 0 970 167 B1**
(45) Veröffentlichungstag und Bekanntmachung des Hinweises auf die Patenterteilung: **16.11.2005**
(21) Anmeldenummer: 98904031.6
(22) Anmeldetag: 03.01.1998
(51) Int. Cl.: C11D 1/14, C11D 3/33, C11D 3/37

(54) **VERFAHREN ZUR REINIGUNG VON OBERFLÄCHEN**
SURFACE-CLEANING METHOD
PROCEDE POUR NETTOYER DES SURFACES

(30) Priorität: 09.01.1997 DE 19700493
(43) Veröffentlichungstag der Anmeldung: 12.01.2000
(73) Patentinhaber: LANXESS Deutschland GmbH, 51369 Leverkusen (DE)
(72) Erfinder: GRÖSCHL, Andreas, D-51375 Leverkusen (DE); GROTH, Torsten, D-51519 Odenthal (DE); HASSMANN, Volker, D-47800 Krefeld (DE); HORN, Jürgen, D-47589 Uedem (DE); JANISCH, Ingo, Groton, MA 01450 (US); JOENTGEN, Winfried, D-51067 Köln (DE); LEHMANN, Bernhard, D-52072 Aachen (DE); ZARGES, Wolfgang, D-51065 Köln (DE)
(86) Internationale Anmeldenummer: PCT/EP1998/000016
(87) Internationale Veröffentlichungsnummer: WO 1998/030661

(56) Entgegenhaltungen:
- EP-A- 0 261 874
- EP-A- 0 513 948
- EP-A- 0 561 464
- EP-A- 0 757 094
- WO-A-95/16767
- DE-A- 3 739 610
- US-A- 4 808 328
- US-A- 5 318 726

## Beschreibung

Die vorliegende Erfindung betrifft ein Verfahren zur Reinigung von Oberflächen aus Glas, Graphit, Keramik, polymeren und metallischen Werkstoffen, künstlichen und vegetabilischen Fasern, z.B. Geweben, Textilien oder Altpapier, insbesondere von Membranoberflächen, durch Ablösen oder Auflösen von organischen und anorganischen Verunreinigungen durch einen einfachen Spülvorgang.

Die Ablagerungen von organischen und anorganischen Verunreinigungen sind in Industrie und Haushalt ein ständiges Problem. So führen die Ablagerungen z. B. zu einer Veringerung der Durchflußmenge oder sogar zu Verstopfungen von Rohrleitungen, zu Verschmutzungen in Reaktoren oder Gegenständen des täglichen Bedarfs. Gerade bei Glasgeräten fallen Verschmutzungen besonders auf und stellen im Haushaltsbereich ein besonderes Problem dar. Zur Aufrechterhaltung der Funktion von Geräten und Materialien und der Hygiene ist die Reinigung der Oberfläche in vielen Bereichen ein wichtiger Vorgang.

Membranen, als ein spezielles Beispiel für Oberflächen, werden in der Industrie und im medizinischen Bereich in vielfältiger Weise eingesetzt. Für ihren wirtschaftlichen Gebrauch ist es wichtig, daß eine hohe Durchflußmenge aufrechterhalten wird. Durch Ablagerungen auf der Membranoberfläche wird die Membran partiell verstopft und es kommt zu einem veringerten und unwirtschaftlichen Permeatfluß. Durch die Verwendung von Reinigungsmitteln können die Verschmutzungen weitgehend entfernt und die Durchflußmenge wieder erhöht werden.

Im Aachener Membrankolloquium, Preprints Seite 41 (1991) wird über den Einsatz verschiedener Spülchemikalien berichtet, wobei nur alkalische Formulierungen, die z.B. EDTA, Phosphate, anionische und nichtionische Tenside sowie Enzyme enthalten, zu ausreichenden Reinigungsleistungen führen. Zitronensäure und Peressigsäure zeigen keine ausreichende Wirkung.

Im Permasep Engineering Manual, Bulletin 507, Seite 1-4 (1982) werden verschiedene Reinigungsmittel und Reinigungsprozeduren angegeben, um eine Membranreinigung durchzuführen. Bei den vorgeschlagenen Reingungsmitteln handelte es sich vielfach um handelsübliche Waschmittel, die eine komplexe Mischung aus verschiedensten Wirkkomponenten darstellen.

In Desalination, 77, 135-179 (1990) wird über Spülprozeduren bei verschiedenen Anwendungen der Ultrafiltration berichtet, wobei eine Reinigung u.U. bereits nach wenigen Stunden Betriebszeit erforderlich ist.

Eine Zusammenstellung von Reinigungsmitteln und deren Wirkmechanismen wird in Desalination, 71, 325-335 (1989) gegeben und insbesondere die Notwendigkeit der Anwendung verschiedener Reinigungsmittel in einer bestimmten Reihenfolge zur Erreichung befriedigender Reinigungsleistungen herausgestellt.

In der Fachzeitschrift Vom Wasser, 67, 59-68 (1986) wird über die Optimierung von Spülverfahren bei der Wasseraufbereitung mittels Umkehrosmoseanlagen berichtet, wobei als Ziel angestrebt wird, anstelle von konfektionierten Waschmitteln chemisch reine Tenside zu verwenden. Die Untersuchungen zeigten, daß eine Kombination von EDTA und einem konfektioniertem Reiniger weniger gute Leistungen lieferte als EDTA allein.

In EP 0 513 948 wird die Reinigung von harten Oberflächen durch ein Reinigungsmittel beschrieben, daß aus verschiedenen Komponenten zusammengesetzt ist und u. a. ein Komplexiermittel und ein organisches Lösungsmittel enthält.

Aus EP 0 261 874 ist eine Reinigungszusammensetzung für harte Oberflächen bekannt, die EDTA und ein Alkansulfonat enthält. Aus US 4 808 328 sind ebenfalls Reinigungsmittel für harte Oberflächen bekannt, die neben EDTA ein Alkansulfonat enthalten.

Aus WO-A-95/16767 sind Flüssigwaschmittel bekannt, die Polyaminosäuren und Polyalkylenglykol, jedoch keine Iminodibernsteinsäure oder ein Derivat davon enthalten. Aus EP-A-0 561 464 sind Polyaminosäuren als Spülhilfsmittel zum Reinigen fester Oberflächen wie Glas bekannt, jedoch wird auch hier kein Iminodisuccinat eingesetzt.

Aus EP-A-0 757 094 ist ein Wasch-oder Reinigungsmittel enthaltend Iminodibernsteinsäure, Polyaminosäure und Talgfettalkoholsulfat als Emulgator bekannt. Dieses Dokument fällt unter Art. 54(3) EPÜ.

Allen Reinigungsmitteln und insbesonders allen Membranreinigern, die ein breites Einsatzfeld abdecken, ist gemeinsam, daß sie aus einer komplexen Mischung verschiedenster Reinigungschemikalien und Hilfsstoffe aufgebaut sind, für eine effektive Reinigung meistens sogar eine Spülprozedur mit verschiedenen Reinigunsmitteln in einer bestimmten Reihenfolge erfolgen muß. Insbesondere enthalten die meisten konfektionierten Membranreiniger Phosphate oder Phosphonate zur Verbesserung der Membranreinigungsleistung.

Es wurde nun überraschenderweise gefunden, daß durch die Verwendung eines Reinigungsmittels mit den Komponenten ii), iii) und iv) oder i), ii), iii) und iv), wobei i), ii), iii) und iv) die folgenden Bedeutungen haben :
i) Iminodibemsteinsäure der Formel (I) 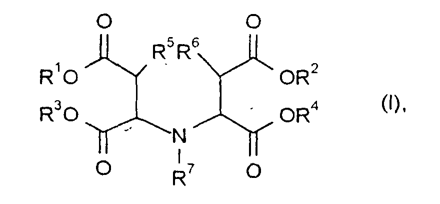 in der
   R¹, R², R³ und R⁴ unabhängig voneinander H, Li, Na, K, NN₄, H₃NCH₂CH₂OH,H₂N(CH₂CH₂OH)₂ oder HN(CH₂CH₂OH)₃ bedeuten,
   R⁵ und R⁶ unabhängig voneinander für H oder OH stehen und
   R⁷ für H, CH₂CH₂OH, CH₂CH₂CH₂OH, CH₂CH(OH)CH₃, CH₂COOR⁸ oder CH₂CH₂COOR⁸ steht, worin R⁸ unabhängig von R¹ den Bedeutungsumfang von R¹ hat,
ii) Polyaminosäure
iii) als Emulgator Naphthalinsulfonsäure und
iv) Wasser,
durch einen einfachen Spülvorgang (keine Prozedur mit verschiedenen Reinigern in Reihenfolge) deutlich bessere Reinigungsleistungen von Oberflächen erreicht werden, insbesondere von Membranoberflächen, als durch die Verwendung von Reinigern, die in der Literatur empfohlen werden. Außerdem werden auch bessere Reinigungsleistungen erreicht, als bei Verwendung von phosphat- und phosphonathaltigen Reinigern.

Die Erfindung betrifft ein Verfahren zur Reinigung von Oberflächen aus Glas, Graphit, Keramik, polymeren und metallischen Werkstoffen, künstlichen und vegetabilischen Fasern und von Membranen durch Ablösen oder Auflösen von organischen oder anorganischen Verunreinigungen oder einem Gemisch beider durch einen einfachen Spülvorgang mit der. Lösung eines Reinigungsmittels insbesondere bei 10 - 100°C und insbesondere einem pH-Wert von 3 - 13, das dadurch gekennzeichnet ist, daß als Reinigungsmittel die Kombinationen wie in Anspruch 1 beschrieben eingesetzt werden.

Die Erfindung betrifft weiterhin Mittel zur Reinigung von Oberflächen aus Glas, Graphit, Keramik, polymeren und metallischen Werkstoffen, künstlichen und vegetabilischen Fasern und von Membranen, wie sie in Anspruch 7 beschrieben sind.

Die erfindungsgemäß einzusetzenden Iminodibernsteinsäuren der Formel (I) werden in wäßriger Lösung eingesetzt.

In bevorzugter Weise steht R⁶ für H, besonders bevorzugt stehen R⁵ und R⁶ für H. In ebenfalls bevorzugter Weise steht R⁷ für H. In weiterhin bevorzugter Weise stehen R⁵, R⁶ und R⁷ für H, so daß (I) die nicht substituierte Iminodibernsteinsäure (IDS) und ihre Salze der oben bezeichneten Art darstellt.

In weiterhin bevorzugter Weise treten an die Stelle von R¹, R², R³ und R⁴ die Reste R¹¹, R¹², R¹³ und R¹⁴ mit der Bedeutung von H, Na, K, NH₄ oder H₃NCH₂CH₂OH.

Die erfindungsgemäß eingesetzten Iminodibernsteinsäuren der Formel (I) liegen in reiner Form vor oder sind vergesellschaftet mit geringen Mengen an Nebenkomponenten aus der Herstellung von (I), wie Maleinsäure, Fumarsäure, Asparaginsäure, Apfelsäure, Asparagin, Weinsäure, Hydroxyasparaginsäure, Kondensate der Asparaginsäure usw. oder deren Salzen mit den oben angegebenen Kationen R¹ bis R⁴. Die Nebenkomponenten liegen im Gemisch in einer Menge von maximal 35 Gew.-%, bevorzugt 30 Gew.-% und besonders bevorzugt 25 Gew.-% vor; der Rest zu 100 Gew.-% ist (I).

Die Herstellung von (I) erfolgt nach bekannten Verfahren im wässrigen Medium, beispielsweise aus Maleinsäureanhydrid, Maleinsäure oder Epoxybernsteinsäure und Ammoniak bzw. Asparaginsäure. Verfahren dieser Art sind beispielsweise beschrieben in GB 1 306 331, SU 0 639 863, JP 6/329 607, JP 6/330 020 und DE 37 39 610.

Bei den erfindungsgemäßen Polyaminosäuren handelt es sich z.B. um Homo- und Copolymere aus Lysin, Glutaminsäure, Alanin und Asparaginsäure und um Proteinhydrolysate.

Bevorzugt werden Polyasparaginsäuren bzw. Polymere mit wiederkehrenden Succinyl-Einheiten eingesetzt, die sowohl aus Asparaginsäure als auch aus Maleinsäureanhydrid, seinen Folgederivaten und Ammoniak hergestellt werden können.

In einer bevorzugten Ausführungsform handelt es sich bei den erfindungsgemäß zu verwendenden Polyaminosäuren um Polymere mit wiederkehrenden Succinyl-Einheiten, die wenigstens eine der folgenden wiederkehrenden Struktur-Einheiten aufweisen: 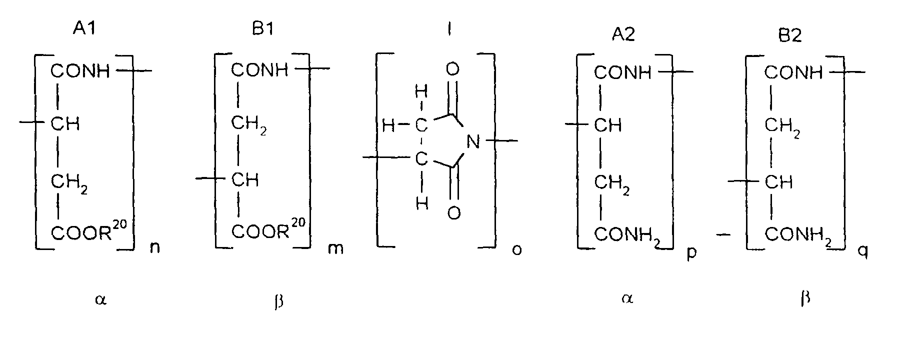 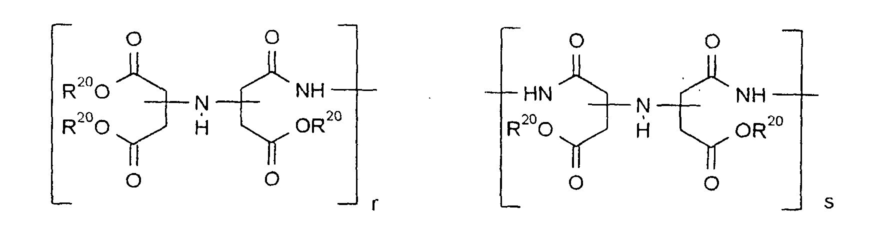 wobei gilt, daß
- R²⁰: für H oder für ein Kation, insbesondere Alkalimetall, Ammonium, unabhängig voneinander bei mehrfachem Auftreten steht,
- n, m, o: für 0 oder eine ganze Zahl von 1 bis 300 stehen,
- p, q: für 0 oder eine ganze Zahl von 1 bis 10 stehen,
- r: für 0 oder eine ganze Zahl von 1 oder 2 steht,
- s: für 0 oder eine ganze Zahl von 1 bis 10 steht, und
n + m + o + p + q ≤ 300, wobei die Indices n, m, o, p, q, r und s angeben, wieviele Einheiten im Polymer, gegebenenfalls statistisch verteilt, enthalten sind.

Unter den erfindungsgemäß zu verwendenden Polymeren werden die entsprechenden freien Säuren, ihre Salze aber auch Derivate der Säuren, insbesondere Anhydride verstanden.

In einer besonders bevorzugten Ausführungsform liegt die wiederkehrende Einheit B1, bezogen auf die Summe der Einheiten B1 und A1, zu wenigstens 50 %, insbesondere zu wenigstens 70 % vor.

Das mittlere Molekulargewicht (MW) kann sich innerhalb einer breiten Spanne bewegen, wobei Polyasparaginsäuren mit Molekulargewichten zwischen 500 und 100.000 g/mol einsetzbar sind, bevorzugt aber sind 1.000 bis 50.000 g/mol oder, noch besser 1.000 bis 30.000 g/mol.

Die Molekulargewichtsbestimmung erfolgt über Gelpermeationschromatographie (GPC) in LiChrospher Diol Säuren (Fa. Merck) und mit Phosphatpuffer (pH = 7) als Eluentlösung. Eine Kalibrierung kann am besten mit reiner Polyasparaginsäure, z.B. Fa. Sigma, deren Molekulargewicht durch eine Absolut-Meßmethode, beispielsweise LALLS bestimmt wurde, erfolgen.

Die erfindungsgemäß zu verwendenden Polymere mit wiederkehrenden Succinyleinheiten sind in einer bevorzugten Ausführungsform im wesentlichen Polyasparaginsäuren. Die Polymeren können nach bekannten Verfahren hergestellt werden, beispielsweise gemäß US-A 4 839 461, US-A 5 371 180, US-A 5 288 783, J. Org. Chem., 24, p 1662-1666 (1959) und J. Org. Chem., 26, 1084 (1961).

Die Naphthalinsulfonsäure Iminocarbonsäuren und Polyaminosäuren werden als Mischungen eingesetzt. Die Mischungsanteile (Massenanteile) von Naphthalinsulfonsäure und Polyaminosäure liegen im Bereich von 99:1 bis 1:99, bevorzugt 20:80 bis 80:20, besonders bevorzugt 40:60 bis 60:40.

Die Mischungsanteile von Iminocarbonsäure und Polyaminosäuren liegen ebenfalls im Bereich von 99:1 bis 1:99, bevorzugt 20:80 bis 80:20, besonders bevorzugt 40:60 bis 60:40.

Die erfindungsgemäßen Reinigungsmittel-Konzentrate werden eingesetzt mit einem Wassergehalt von 99,9 Gew.-% bis 40 Gew.-%, bevorzugt 95 Gew.-% bis 50 Gew.-%, besonders bevorzugt 95 Gew.-% bis 60 Gew.-%.

Die erfindungsgemäßen Reinigungsmittel werden bei pH-Werten von 3-13, bevorzugt bei 4-12, besonders bevorzugt bei 4,5-11,5 und bei Temperaturen von 10-100°C, bevorzugt bei 15-85°C eingesetzt.

Die erfindungsgemäßen Reinigungsmittel werden zur Reinigung von Oberflächen aus Glas, Graphit, Keramik, polymeren und metallischen Werkstoffen, künstlichen und pflanzlichen Fasern, z.B. Geweben, Textilien oder Altpapier, insbesonders zur Reinigung von Membranobertlächen eingesetzt.

Membranen, die erfindungsgemäß gereinigt werden, sind solche, die bevorzugt in Druckpermeationsverfahren eingesetzt werden. Die Membranen können aus folgenden Materialien aufgebaut sein: Celluloseester, wie zum Beispiel Celluloseacetat, Celluloseacetopropionat, Celluloseacetobutyrat, Polyolefine, wie Polyethylen oder Polypropylen, Copolymere aus Ethylen und C₃-C₈-Olefinen, Polyimide, Polyamide, Polyphenylensulfone, Polyphenylenether, Polyphenylensulfonester, Polyphenylenetherester, Keramik, SiO₂, Kohlenstoff, Polypiperazinamid, Polytetrafluorethylen (PTFE), Polyvinylidenfluorid (PVDF), Polyacrylnitril (PAN), Polysulfon.

Die zu reinigende Membran oder das zu reinigende Membranmodul wird mit einer wässrigen, wässrig-alkoholischen, wässrig-ketonischen oder wässrig-alkoholisch-ketonischen Lösung des Emulgators, der Iminocarbonsäure, der Polyaminosäure oder eines Gemisches davon, gegebenenfalls unter Zusatz handelsüblicher Waschmittelenzyme, wie beispielsweise Proteasen, Lipasen oder Amylasen so behandelt, daß eine solche Lösung über die Membranoberfläche bzw. durch das Membranmodul hindurch umgepumpt wird. Als Alkohol kommt ein C₁-C₄-Alkohol, wie Methanol, Ethanol, Propanol, 1-Propanol, Butanol, i-Butanol, bevorzugt Methanol, Ethanol, i-Propanol in Frage. Als Keton kommt Aceton (C₃) oder Methyl-ethylketon (C₄) in Frage. Von diesen organischen Lösungsmitteln sind Alkohole bevorzugt. Die Dauer der Reinigungsbehandlung ist selbstverständlich in einer dem Fachmann geläufigen Weise von dem Grad der Verschmutzung, von der Intensität des Umpumpens, von der Konzentration der Reinigungslösung und gegebenenfalls von den genannten Inhaltsstoffen sowie von der Temperatur abhängig. Der Grad der Reinigung kann durch die Bestimmung der Durchflußmenge durch die Membran kontrolliert werden.

Die Herstellung der erfindungsgemäßen Reinigungsmittel geschieht durch einfaches Auflösen der Komponenten i), ii), iii), und iv) oder ii), iii) und iv) sowie gegebenenfalls des Alkaliträgers bzw. des Enzyms oder einer Mehrzahl solche Stoffe in Wasser, einem Wasser-/Alkohol-Gemisch, einem Wasser/Keton-Gemisch oder einem Wasser/Alkohol/Keton-Gemisch in den angegebenen Mengen und Verhältnissen. Zur Lagerhaltung oder für Versandzwecke kann ein Gemisch von Trockensubstanzen, beispielsweise Schuppenware von einer Trocknungswalze oder Sprühtrocknergranulat hergestellt werden. Für den Fall, daß flüssige Stoffe eingesetzt werden, beispielsweise hochkonzentrierte Alkalimetallauge oder Ethanolamin, bietet sich eine beispielsweise 10 bis 60 Gew.%ige Lösung für Lagerhaltung und Versand an.

Außerdem kann die erfindungsgemäße Reinigungslösung weitere Komponenten enthalten wie z. B. Enzyme, Alkohole, Lösungsvermittler sowie Hilfs- und Duftstoffe.

Die Reinigungsleistung der erfindungsgemäßen Reinigungsmittel sei an folgenden Beispielen demonstriert:

### Beispiel 1 (nicht erfindungsgemäß)

Eine wäßrige Lösung, bestehend aus 30 Gew.-% H₂SO₄, 30 Gew.-% Naphthalinsulfonsäure und 40 Gew.-% Wasser, wurde im Batchbetrieb bei einem Betriebsdruck von 60 bar und einer Betriebstemperatur von 40 °C für 20 Stunden diafiltriert und anschließend die Membrantrennleistung unter Standardbedingungen (1000 mg/l Na₂SO₄, 25 bar, 30 °C) bestimmt. Als Modul wurde ein Wickelmodul eingesetzt. Anschließend wurde das Modul mit 50 l einer wäßrigen Lösung, bestehend aus 0,5 Gew.% des obigen Emulgators, 0,5 Gew.% IDS-Na-Salz und 99 Gew.-% Wasser bei 40°C und einer Anströmung von 1,2 m³/h für 30 Minuten drucklos im Kreislautbetrieb gespült und erneut die Membrantrennleistung unter Standardbedingungen (1000 mg/l Na₂SO₄, 25 bar, 30 °C) bestimmt. Durch die Spülung konnte die Modultrennleistung unter Standardbedingungen um 5 % bei gleichzeitiger Abnahme der Salzpassage von 5,4% auf 2,2 % angehoben werden..

### Beispiel 2 (nicht erfindungsgemäß)

Eine wäßrige Lösung, bestehend aus 7 Gew.% Flavonsäure-Na-Salz und Spuren von Verunreinigungen, wurden absatzweise mit Hilfe der Umkehrosmose auf 50 % des Eingangsvolumens bei einem Betriebsdruck von 40 bar und einer Betriebstemperatur von 40°C aufkonzentriert. Als Modul wurde das aus Beispiel 3 eingesetzt. Anschließend wurde das Modul mit 50 I einer wäßrigen Lösung, bestehend aus 0,5 Gew.-% des obigen Emulgators, 0,5 Gew.-% EDTA und 99 Gew.-% Wasser bei 40°C und einer Anströmung von 1,2 m³/h für 30 Minuten drucklos im Kreislaufbetrieb gespült und die Membrantrennleistung unter Standardbedingungen (1000 mg/l Na₂SO₄, 25 bar, 30 °C) bestimmt. Es wurde eine weitere Spülung mit 50 1 einer wäßrigen Lösung, bestehend aus 0,5 Gew.-% des obigen Emulgators, 0,5 Gew.-% IDS Na-Salz und 99 Gew.-% Wasser, bei 40°C und einer Anströmung von 1,2 m³/h für 30 Minuten drucklos im Kreislaufbetrieb durchgeführt und eine erneute Messung der Membrantrennleistung unter Standardbedingungen vorgenommen. Durch die zweite Spülung mit IDS-Na-Salz konnte die Modultrennleistung unter Standardbedingungen bei einer Salzpassage von 0,3 % um einen weiteren Prozentpunkt gegenüber der ersten Spülung angehoben werden.

### Vergleichsbeispiel 1

Beispiel 1 wurde wiederholt. Als Spüllösung wurden jedoch 10 l einer wäßrigen Lösung, bestehend aus 1,5 Gew.-% Ultrasil 40® (Handelsprodukt Fa. Henkel, Düsseldorf, bestehend im wesentlichen aus organischen Komplexbildnern und Alkaliträgern) und 98,5 Gew.-% Wasser, eingesetzt; es wurde bei 40°C und einer Anströmung von 1,2 m³/h für 20 Minuten drucklos im Kreislaufbetrieb gespült. Daraufhin wurde erneut die Modultrennleistung unter Standardbedingungen bestimmt. Nach Beaufschlagung des Moduls mit dem Abwasser von Beispiel 1 wurde ein Rückgang im Permeatfluß auf 64 % des Permeatflusses unter Standardbedingungen vor Beaufschlagung mit dem Abwasser bei unveränderter Salzpassage (Konzentration im Feed/Konzentration im Permeat) von 2,9 % festgestellt. Durch die Spülung konnte die Modultrennleistung nur auf 83 % des Permeatflusses unter Standardbedingungen vor Beaufschlagung mit dem Abwasser, bei einer Salzpassage von 2,9 %, angehoben werden. Durch eine anschließende weitere Spülung mit 10 l einer wäßrigen Lösung, bestehend aus 0,15 Gew.-% des obigen Emulgators, 0,25 Gew.-% EDTA und 99,6 Gew.-% Wasser, bei 40°C und einer Anströmung von 1,2 m³/h für 20 Minuten drucklos im Kreislaufbetrieb konnte der Permeatfluß auf 98 % des Permeatflusses unter Standardbedingungen vor Beaufschlagung mit dem Abwasser, also fast auf Ausgangsleistung, bei einer unveränderter Salzpassage (Konzentration im Feed/Konzentration im Permeat) von 2,9 %, angehoben werden.

### Vergleichsbeispiel 2

Beispiel 1 wurde wiederholt. Als Spüllösung wurden jedoch 10 l einer wäßrigen Lösung, bestehend aus 1 Gew.-% Ultrasil 10® (Handelsprodukt Fa. Henkel, Düsseldorf, bestehend im wesentlichen aus Na-acetat, Na-sulfat, Na-phosphat, Alkylbenzolsulfonat und EDTA) und 99 Gew.-% Wasser, bei 40°C und einer Anströmung von 1,2 m³/h für 20 Minuten drucklos im Kreislaufbetrieb gespült. Daraufhin wurde erneut die Modultrennleistung unter Standardbedingungen bestimmt. Nach Beaufschlagung des Moduls mit dem Abwasser von Beispiel 1 wurde ein Rückgang im Permeatfluß auf 65 % des Permeatflusses unter Standardbedingungen vor Beaufschlagung mit dem Abwasser bei unveränderter Salzpassage (Konzentration im Feed/Konzentration im Permeat) von 2,1 % festgestellt. Durch die Spülung konnte die Modultrennleistung nur auf 87 % des Permeatflusses unter Standardbedingungen vor Beaufschlagung mit dem Abwasser bei einer Salzpassage von 1,9 % angehoben werden.

### Beispiel 3 (erfindungsgemäß)

Eine wäßrige Lösung eines optischen Aufhellers, die mit Entschäumerschmiere verunreinigt war, wurde absatzweise bei einem Betriebsdruck von 30 bar und einer Betriebstemperatur von 50°C über einen Zeitraum von 10 h beaufschlagt, wobei Permeat und Konzentrat in die Vorlage zurückgeführt wurden.

Anschließend wurde die Lösung abgelassen, mit Wasser gespült, und der Reinwasserfluß unter Standardbedingungen (25°C, 20 bar) bestimmt. Als Modul wurde ein Plattenmodul eingesetzt, das nach der Bestimmung des Reinwasserflusses mit 10 l einer wäßrigen Lösung, bestehend aus 0,5 Gew.-% des obigen Emulgators, 0,25 Gew.-% Polyasparaginsäure-Na-Salz und 99,25 Gew.-% Wasser bei 40°C für 20 Minuten drucklos im Kreislaufbetrieb gespült wurde. Danach wurde unter Standardbedingungen (25°C, 20 bar) erneut der Reinwasserfluß gemessen. Durch die Reinigung konnte die Permeatleistung unter Standardbedingungen um 15 % gegenüber der Permeatleistung vor der Spülung angehoben werden.

### Vergleichsbeispiel 3

Beispiel 3 wurde wiederholt. Als Spüllösung wurde jedoch eine wäßrige Lösung, bestehend aus 0,5 Gew.-% Ultraperm 091® (Handelsprodukt Fa. Henkel, bestehend aus anionischen und amphoteren Tensiden, Alkali sowie Komplexbildnern) und 99,5 Gew.-% Wasser, eingesetzt. Es wurde bei 40°C für 20 Minuten drucklos im Kreislaufbetrieb gespült. Daraufhin wurde auch hier der Reinwassertluß unter Standardbedingungen bestimmt. Durch die Reinigung konnte die Permeatleistung unter Standardbedingungen um 6 % gegenüber der Permeatleistung vor der Spülung angehoben werden. Im Beispiel 3 wurde dagegen eine Anhebung der Permeatleistung um 15 % erreicht.

### Beispiel 4 (nicht erfindungsgemäß)

Eine wäßrige chromhaltige Mutterlauge aus der Farbstoffproduktion wurde bei einem Betriebsdruck von 30 bar und einer Temperatur von 25°C über einen Zeitraum von 12 Stunden beaufschlagt, wobei am Anfang und am Ende für jeweils 3 h Permeat und Retentat zurückgeführt wurden. Dazwischen wurde durch Abzug von Permeat eine Aufkonzentrierung ausgeführt. Nach 12 h wurde die Lösung abgelassen, mit Wasser gespült und der Reinwasserfluß unter Standardbedingungen (25°C, 20 bar) bestimmt. Als Modul wurde ein Plattenmodul eingesetzt, das nach der Bestimmung des Reinwasserflusses mit 10 1 einer wäßrigen Lösung, bestehend aus 0,5 Gew.-% des obigen Emulgators, 0,25 Gew.-% Iminodisuccinat-Na-Salz und 99,25 Gew.-% Wasser bei 40°C für 20 Minuten drucklos im Kreislaufbetrieb gespült wurde. Danach wurde unter Standardbedingungen (25°C, 20 bar) erneut der Reinwasserfluß gemessen. Durch die Reinigung konnte die Permeatleistung unter Standardbedingungen um 21 % gegenüber der Permeatleistung vor der Spülung angehoben werden.

### Vergleichsbeispiel 4

Beispiel 4 wurde wiederholt. Als Spüllösung wurde jedoch eine wäßrige Lösung, bestehend aus 0,5 Gew.-% Ultraperm 091® (Handelsprodukt Fa. Henkel, bestehend aus anionischen und amophoteren Tensiden, Alkali sowie Komplexbildnern) und 99,5 Gew.-% Wasser, eingesetzt. Es wurde bei 40°C für 20 Minuten drucklos im Kreislaufbetrieb gespült. Daraufhin wurde auch hier der Reinwasserfluß unter Standardbedingungen bestimmt. Durch die Reinigung konnte die Permeatleistung unter Standardbedingungen um 8 % gegenüber der Permeatleistung vor der Spülung angehoben werden. Im Beispiel 4 wurde dagegen eine Anhebung der Permeatleistung um 21 % erreicht.

## Patentansprüche

1. Verfahren zur Reinigung von Oberflächen aus Glas, Graphit, Keramik, polymeren und metallischen Werkstoffen, künstlichen und vegetabilischen Fasern und von Membranen durch Ablösen oder Auflösen von organischen und anorganischen Verunreinigungen oder einem Gemisch beider durch einen Spülvorgang mit der Lösung eines Reinigungsmittels, **dadurch gekennzeichnet, dass** dieses die Komponenten iii) und iv) oder i), ii), iii) und iv) enthält und i), ii), iii) und iv) die folgenden Bedeutungen haben:
i) Iminodibernsteinsäure der Formel (I) 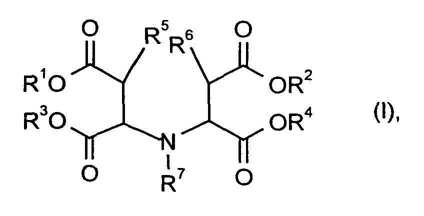 in der
R¹, R², R³ und R⁴ unabhängig voneinander H, Li, Na, K, NH₄, H₃NCH₂CH₂OH,H₂N(CH₂CH₂OH)₂ oder HN(CH₂CH₂OH)₃ bedeuten,
R⁵ und R⁶ unabhängig voneinander für H oder OH stehen und
R⁷ für H, CH₂CH₂OH, CH₂CH₂CH₂OH, CH₂CH(OH)CH₃, CH₂COOR⁸ oder CH₂CH₂COOR⁸ steht, worin R⁸ unabhängig von R¹ den Bedeutungsumfang von R¹ hat,
ii) eine Polyaminosäure
iii) Naphthalinsulfonsäure als Emulgator
iv) Wasser.

2. Verfahren gemäß Anspruch 1, **dadurch gekennzeichnet, dass** als Polyaminsäuren wiederkehrende Struktureinheiten der Reihe 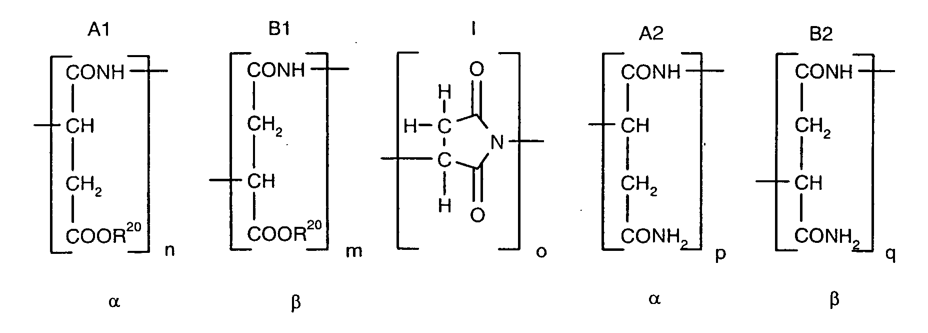 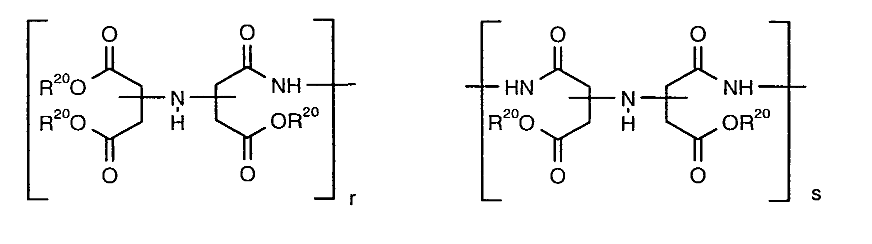 eingesetzt werden, wobei gilt, dass
R²⁰ für H oder für ein Kation, insbesondere Alkalimetall, Ammonium, unabhängig voneinander bei mehrfachem Auftreten steht,
n, m, o für 0 oder eine ganze Zahl von 1 bis 300 stehen,
p, q für 0 oder eine ganze Zahl von 1 bis 10 stehen,
r für 0 oder eine ganze Zahl von 1 oder 2 steht,
s für 0 oder eine ganze Zahl von 1 bis 10 steht und
n + m + o + p + q ≤ 300, wobei die Indices n, m, o, p, q, r und s angeben, wie viele Einheiten im Polymer, gegebenenfalls statistisch verteilt, enthalten sind.

3. Verfahren nach Anspruch 1, **dadurch gekennzeichnet, dass** die Oberfläche einer Membran gereinigt wird.

4. Verfahren nach Anspruch 3, **dadurch gekennzeichnet, dass** die Membran aus einem Material aus der Gruppe von Celluloseestern, Polyolefinen, Polyimiden, Polyamiden, Polyphenylensulfonen, Polyphenylenethern, Polyphenylensulfonestern, Polyphenylenetherestern, Keramik, SiO₂, Kohlenstoff, Polypiperazinamiden, Polytetrafluorethylen, Polyvinylidenfluorid, Polyacrylnitril und Polysulfonen besteht.

5. Verfahren nach Anspruch 1, **dadurch gekennzeichnet, dass** bei 10 - 100°C gearbeitet wird.

6. Verfahren nach Anspruch 1, **dadurch gekennzeichnet, dass** bei einem pH-Wert von 3 - 13 gearbeitet wird.

7. Mittel zur Reinigung von Oberflächen aus Glas, Graphit, Keramik, polymeren und metallischen Werkstoffen, künstlichen und vegetabilischen Fasern und von Membranen, **dadurch gekennzeichnet, dass** diese die Komponenten i), ii), iii) und iv) oder ii), iii) und iv) enthalten und iv) zu 40 - 99,9 Gew% in gesamten Mittel enthalten ist. , und i), ii), iii) und iv) folgende Bedeutungen haben:
i) Iminodibemsteinsäure der Formel (I) 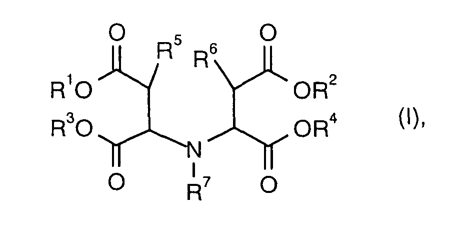 in der
R¹, R², R³ und R⁴ unabhängig voneinander H, Li, Na, K, NH₄, H₃NCH₂CH₂OH,H₂N(CH₂CH₂OH)₂ oder HN(CH₂CH₂OH)₃ bedeuten,
R⁵ und R⁶ unabhängig voneinander für H oder OH stehen und
R⁷ für H, CH₂CH₂OH, CH₂CH₂CH₂OH, CH₂CH(OH)CH₃, CH₂COOR⁸ oder CH₂CH₂COOR⁸ steht, worin R⁸ unabhängig von R¹ den Bedeutungsumfang von R¹ hat,
ii) eine Polyaminosäure
iii) Naphtahlinsulfonsäure als Emulgator
iv) Wasser.

8. Mittel nach Anspruch 7, **dadurch gekennzeichnet, dass** bei Vorliegen eines Gemisches von Iminodibemsteinsäure der Formel (I) gemäß Anspruch 1 und eine Polyaminosäure beide Bestandteile im Masseverhältnis von 99:1 - 1:99 vorliegen.

9. Verwendung der Mittel gemäß Anspruch 8 zur Reinigung von Oberflächen aus Glas, Graphit, Keramik, polymeren und metallischen Werkstoffen, künstlichen und vegetabilischen Fasern und von Membranen.

10. Verwendung der Mittel gemäß Anspruch 9, **dadurch gekennzeichnet dass** die Membran aus einem Material aus der Gruppe Celluloseester, Polyolefine, Polyimide, Polyamide, Polyphenylensulfone, Polyphenylenether, Polyphenylensulfonester, Polyphenylenetherester, Keramik, SiO₂, Kohlenstoff, Polypiperazinamide, Polytetrafluorethylen, Polyvinylidenfluorid, Polyacrylnitril und Polysulfonen besteht.

## Claims

1. Method of cleaning surfaces made of glass, graphite, ceramic, polymeric and metallic materials, synthetic and vegetable fibres, and membranes by detaching or dissolving organic and inorganic soilings or a mixture of the two by a flushing operation with a solution of a cleaning composition, **characterized in that** this comprises the components ii), iii) and iv) or i), ii), iii) and iv) and i), ii), iii) and iv) have the following meanings:
i) iminodisuccinic acid of the formula (I) 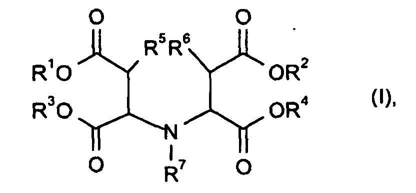 in which
R¹, R², R³ and R⁴ independently of one another are H, Li, Na, K, NH₄, H₃NCH₂CH₂OH, H₂N(CH₂CH₂OH)₂ or HN(CH₂CH₂OH)₃,
R⁵ and R⁶ independently of one another are H or OH, and
R⁷ is H, CH₂CH₂OH, CH₂CH₂CH₂OH, CH₂CH(OH)CH₃, CH₂COOR⁸ or CH₂CH₂COOR⁸ , where R⁸ independently of R¹ has the scope of meanings of R¹,
ii) a polyamino acid
iii) naphthalenesulphonic acid as emulsifier
iv) water.

2. Method according to Claim 1, **characterized in that** the polyamino acids used are repeat structural units of the series 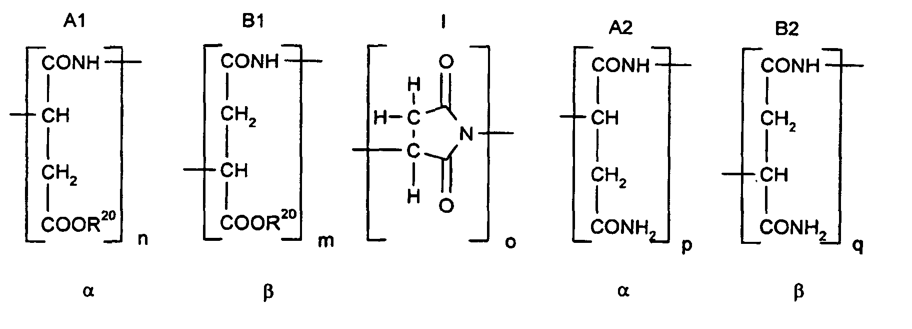 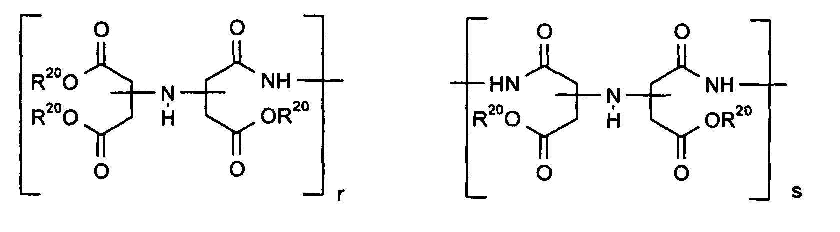 where the following statements apply:
R²⁰ is H or is a cation, in particular alkali metal, ammonium, independently of one another where two or more are present,
n, m, o is 0 or an integer from 1 to 300,
p, q is 0 or an integer from 1 to 10,
r is 0 or an integer 1 or 2,
s is 0 or an integer from 1 to 10, and
n + m + o + p + q is ≤ 300, where the indices n, m, o, p, q, r and s indicate how many units are present in the polymer, optionally in random distribution.

3. Method according to Claim 1, **characterized in that** the surface of a membrane is cleaned.

4. Method according to Claim 3, **characterized in that** the membrane consists of a material from the group consisting of cellulose esters, polyolefins, polyimides, polyamides, polyphenylenesulphones, polyphenylene ethers, polyphenylenesulphonic esters, polyphenylene ether esters, ceramic, SiO₂, carbon, polypiperazinamides, polytetrafluoroethylene, polyvinylidene fluoride, polyacrylonitrile and polysulphones.

5. Method according to Claim 1, **characterized in that** it is carried out at 10-100°C.

6. Method according to Claim 1, **characterized in that** it is carried out at a pH of 3-13.

7. Composition for cleaning surfaces made of glass, graphite, ceramic, polymeric and metallic materials, synthetic and vegetable fibres, and membranes, **characterized in that** these comprise the components i), ii), iii) and iv) or ii), iii) and iv) and iv) is present in an amount of 40-99.9% by weight in the overall composition and i), ii), iii) and iv) have the following meanings:
i) iminodisuccinic acid of the formula (I) 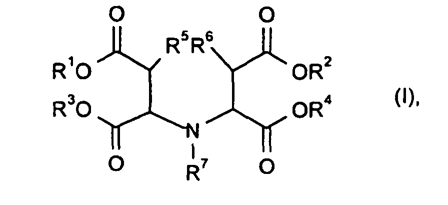 in which
R¹, R², R³ and R⁴ independently of one another are H, Li, Na, K, NH₄, H₃NCH₂CH₂OH, H₂N(CH₂CH₂OH)₂ or HN(CH₂CH₂OH)₃,
R⁵ and R⁶ independently of one another are H or OH, and
R⁷ is H, CH₂CH₂OH, CH₂CH₂CH₂OH, CH₂CH(OH)CH₃, CH₂COOR⁸ or CH₂CH₂COOR⁸, where R⁸ independently of R¹ has the scope of meanings of R¹,
ii) a polyamino acid
iii) naphthalenesulphonic acid as emulsifier
iv) water.

8. Composition according to Claim 7, **characterized in that** where a mixture of iminodisuccinic acid of the formula (I) in accordance with Claim 1 and a polyamino acid is present, the two constituents are in the mass ratio 99:1-1:99.

9. Use of the composition according to Claim 8 for cleaning surfaces made of glass, graphite, ceramic, polymeric and metallic materials, synthetic and vegetable fibres, and membranes.

10. Use of the composition according to Claim 9, **characterized in that** the membrane consists of a meterial from the group consisting of cellulose esters, polyolefins, polyimides, polyamides, polyphenylenesulphones, polyphenylene ethers, polyphenylenesulphonic esters, polyphenylene ether esters, ceramic, SiO₂, carbon, polypiperazinamides, polytetrafluoroethylene, polyvinylidene fluoride, polyacrylonitrile and polysulphones.

## Revendications

1. Procédé pour nettoyer des surfaces en verre, graphite, céramique, matériaux polymères et métalliques, fibres synthétiques et végétales et de membranes, par séparation et dissolution des impuretés organiques et inorganiques et un mélange des deux, par un processus de rinçage avec la solution d'un agent de nettoyage, **caractérisé en ce que** celui-ci contient les composants ii), iii) et iv) ou i), ii), iii) et iv) et i), ii), iii) et iv) ont les significations suivantes :
i) acide iminodisuccinique de la formule (I) : 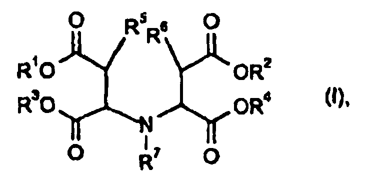 dans laquelle :
R¹, R², R³ et R⁴ représentent indépendamment l' un de l'autre, H, Li, Na, K, NH₄, H₃NCH₂CH₂OH, H₂N(CH₂CH₂OH)₂, ou HN (CH₂CH₂OH)₃ ,
R⁵ et R⁶ représentent indépendamment l'un de l'autre, H ou OH, et
R⁷ représente H, CH₂CH₂OH, CH₂CH₂CH₂OH, CH₂CH (OH) CH₃, CH₂COOR⁸ ou CH₂ CH₂COOR⁸, où R⁸ a indépendamment de R¹, la signfication de R¹,
ii) un poly(acide aminé),
iii) l'acide naphtalènesulfonique comme émulsionnant,
iv) de l'eau.

2. Procédé selon la revendication 1, **caractérisé en ce que** l'on met en oeuvre comme poly(acide aminé), les unités récurrentes de structure de la série : 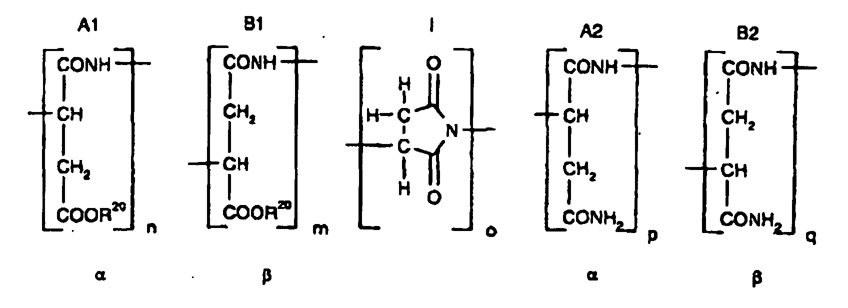 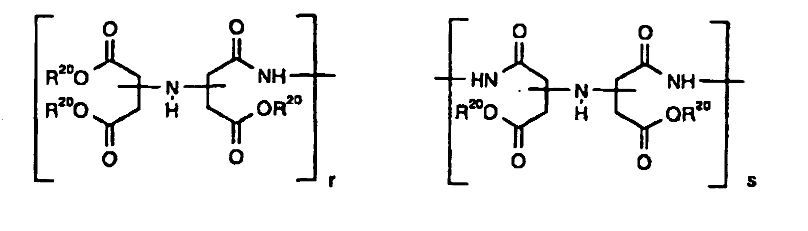 où
R²⁰ représente H ou un cation, en particulier un métal alcalin, ammonium, indépendamment l'un de l'autre en cas de plusieurs apparitions,
n, m, o représentent 0 ou un nombre entier allant de 1 à 300,
p, q représentent 0 ou un nombre entier allant de 1 à 10,
r représente 0 ou le nombre entier 1 ou 2,
s représente 0 ou un nombre entier allant de 1 à 10, et
n + m + o + p + q ≤ 300, où les indices n, m, o, p, q, r et s indiquent combien d'unités sont présentes de le polymère, le cas échéant statistiquement distribuées.

3. Procédé selon la revendication 1, **caractérisé en ce** la surface d'une membrane est nettoyée.

4. Procédé selon la revendication 3, **caractérisé en ce** la membrane consiste en un matériau du groupe des esters de la cellulose, des polyoléfines, des polyimides, des polyamides, des polyphénylènesulfones, des polyphénylèneéthers, des poly(esters de phénylènesulfone), des poly(esters de phénylèneéther), la céramique, SiO₂, le carbone, des poly(amides de pipérazine), le polytétrafluoroéthylène, le poly(fluorure de vinylidène), le polyacrylonitrile et des polysulfones.

5. Procédé selon la revendication 1, **caractérisé en ce** l'on travaille de 10 à 100°C.

6. Procédé selon la revendication 1, **caractérisé en ce** l'on travaille à un pH allant de 3 à 13.

7. Agent de nettoyage de surfaces en verre, graphite, céramique, matériaux polymères et métalliques, fibres synthétiques et végétales et de membranes, **caractérisé en ce que** celui-ci contient les composants ii), iii) et iv) ou i), ii), iii) et iv), **en ce que** iv) est présent en une quantité de 40 à 99,9% en poids de l'agent global, et i), ii), iii) et iv) ont les significations suivantes :
i) acide iminodisuccinique de la formule (I) : 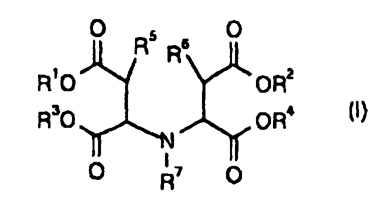 dans laquelle :
R¹, R², R³ et R⁴ représentent indépendamment l'un de l'autre, H, Li, Na, K, NH₄, H₃NCH₂CH₂OH, H₂N (CH₂CH₂OH)₂, ou HN (CH₂CH₂OH)₃ ,
R⁵ et R⁶ représentent indépendamment l'un de l'autre, H ou OH, et
R⁷ représente H, CH₂CH₂OH, CH₂CH₂CH₂OH, CH₂CH (OH) CH₃, CH₂COOR⁸ ou CH₂ CH₂COOR⁸ , où R⁸ a indépendamment de R¹, la signfication de R¹,
ii) un poly(acide aminé),
iii) l'acide naphtalènesulfonique comme émulsionnant,
iv) de l'eau.

8. Agent selon la revendication 7, **caractérisé en ce que** lors de la présence d'un mélange d'acides iminodisucciniques de la formule (I) selon la revendication 1 et d'un poly(acide aminé), les deux constituants sont présents en un rapport pondéral de 99:1-1:99.

9. Utilisation de l'agent selon la revendication 8, pour le nettoyage de surfaces en verre, graphite, céramique, matériaux polymères et métalliques, fibres synthétiques et végétales et de membranes.

10. Utilisation de l'agent selon la revendication 9, **caractérisée en ce que** la membrane consiste en un matériau du groupe des esters de la cellulose, des polyoléfines, des polyimides, des polyamides, des polyphénylènesulfones, des polyphénylèneéthers, des poly(esters de phénylènesulfone), des poly(esters de phénylèneéther), la céramique, SiO₂, le carbone, des poly(amides de pipérazine), le polytétrafluoroéthylène, le poly(fluorure de vinylidène), le polyacrylonitrile et des polysulfones.
